**Europäisches Patentamt**

**European Patent Office**

**Office européen des brevets**

(19)

(11) **EP 1 475 524 A1**

(12) **EUROPÄISCHE PATENTANMELDUNG**

(43) Veröffentlichungstag:
　　**10.11.2004 Patentblatt 2004/46**

(51) Int Cl.⁷: **F02B 33/44**, F02B 37/16,
　　F02D 41/00, F02D 23/00

(21) Anmeldenummer: **04005088.2**

(22) Anmeldetag: **04.03.2004**

(84) Benannte Vertragsstaaten:
　　**AT BE BG CH CY CZ DE DK EE ES FI FR GB GR
　　HU IE IT LI LU MC NL PL PT RO SE SI SK TR**
　　Benannte Erstreckungsstaaten:
　　**AL LT LV MK**

(30) Priorität: **07.05.2003 DE 10320277**

(71) Anmelder: **ROBERT BOSCH GMBH**
　　**70442 Stuttgart (DE)**

(72) Erfinder:
　　• **Wegener, Sabine**
　　　**71679 Asperg (DE)**
　　• **Wild, Ernst**
　　　**71739 Oberriexingen (DE)**

(54) **Verfahren und Vorrichtung zum Betreiben einer Brennkraftmaschine**

(57)　Es werden ein Verfahren und eine Vorrichtung zum Betreiben einer Brennkraftmaschine (1) vorgeschlagen, die eine genaue und schnell reagierende Vorsteuerung für eine Ladedruckregelung ermöglichen. Die Brennkraftmaschine (1) umfasst einen Verdichter (5) zur Verdichtung der der Brennkraftmaschine (1) zugeführten Luft, wobei ein vorgegebener Sollladedruck über ein Stellelement (10) in einem Bypass (15) zum Verdichter (5) eingestellt wird. Aus dem Sollladedruck wird ein Sollluftmassenstrom durch den Bypass (15) ermittelt. Aus dem Sollluftmassenstrom durch den Bypass (15) wird ein Sollwert für die Stellung des Stellelementes (10) abgeleitet.

Fig. 1

**Beschreibung**

Stand der Technik

Die Erfindung geht von einem Verfahren und von einer Vorrichtung zum Betreiben einer Brennkraftmaschine nach der Gattung der unabhängigen Ansprüche aus.
Es sind bereits Brennkraftmaschinen bekannt, beispielsweise Ottomotoren oder Dieselmotoren, die einen Verdichter zur Verdichtung der der Brennkraftmaschine zugeführten Luft umfassen. Dabei wird der Verdichter durch einen Bypass umgangen. Der Bypass umfasst ein Stellelement, das variabel eingestellt werden kann. Durch geeignete Einstellung des Stellelements lässt sich ein vorgegebener Sollladedruck einstellen.
Um beispielsweise Ottomotoren aufzuladen, werden neben Abgasturboladern auch mechanische Lader eingesetzt. Ein mechanischer Lader ist über ein Getriebe mit einem Motor der Brennkraftmaschine verbunden. Die Drehzahl des mechanischen Laders hängt deshalb starr an der Motordrehzahl. In manchen Fällen ist zwischen dem mechanischen Lader und dem Motor eine Kupplung installiert, mit der die Verbindung zum Motor aufgetrennt werden kann. Um ein Verdichterdruckverhältnis des mechanischen Laders und damit den Ladedruck stetig einstellbar zu machen, wird um den mechanischen Lader der oben beschriebene Bypass gelegt. Das Stellelement im Bypass, das beispielsweise als Drosselklappe ausgebildet sein kann, wird so gesteuert, dass ein Teil der verdichteten Luft wieder zurückfließt und erneut verdichtet wird, den abhängig von der Drehzahl des mechanischen Laders und dem Luftdurchsatz durch den mechanischen Lader stellt sich am mechanischen Lader ein bestimmtes Verdichterdruckverhältnis ein. Durch Variation des Luftdurchsatzes wird der gewünschte Sollladedruck eingestellt.
Es ist weiterhin bekannt, die Stellung des Stellelements über ein appliziertes Kennfeld zu ermitteln, das mit der Drehzahl des mechanischen Laders und dem Sollladedruck adressiert ist. Ein solches Kennfeld liefert aber nur für einen eingeschränkten Betriebsbereich der Brennkraftmaschine korrekten Wert für die Stellung des Stellelements zur Einstellung des gewünschten Sollladedrucks. Temperatur- und Druckänderungen bleiben dabei weitgehend unberücksichtigt.

Vorteile der Erfindung

Das erfindungsgemäße Verfahren und erfindungsgemäße Vorrichtung mit den Merkmalen der unabhängigen Ansprüche haben demgegenüber den Vorteil, dass aus dem Sollladedruck ein Sollluftmassenstrom durch den Bypass ermittelt wird und dass aus dem Sollluftmassenstrom durch den Bypass ein Sollwert für die Stellung des Stellelementes abgeleitet wird. Auf diese Weise lassen sich die physikalischen Zusammenhänge zwischen der Stellung des Stellelementes und dem einzustellenden Sollladedruck besser berücksichtigen, sodass auch Temperatur- und Druckänderungen für die Bestimmung der Stellung des Stellelementes berücksichtigt werden und die Stellung des Stellelementes für einen weitgehend unbeschränkten Betriebsbereich der Brennkraftmaschine korrekt ermittelt werden kann. Somit wird in allen Betriebsbereichen der Brennkraftmaschine aufgrund einer physikalisch basierten Funktion ein guter Vorsteuerungswert für die Stellung des Stellelementes und damit die Erreichung des Sollladedruckes geliefert. Dabei lassen sich stationär die Betriebspunkte des einzustellenden Sollladedruckes hinreichend genau einstellen. Bei messbaren Änderungen im Verhältnis des Sollladedruckes zum Istladedruck ist dabei eine sofortige Änderung der Einstellung Stellelementes möglich. Ein zusätzlicher Regler, der den Sollladedruck mit dem Istladedruck vergleicht und damit die Stellung des Stellelementes korrigiert, braucht dann nur noch nicht messbare Störungen ausregeln, die sich beispielsweise auf Grund von Ungenauigkeiten des physikalischen Modells bzw. der physikalischen Funktion ergeben.
Durch die in den Unteransprüchen aufgeführten Maßnahmen sind vorteilhafte Weiterbildungen und Verbesserungen des im Hauptanspruch angegebenen Verfahrens möglich.
Besonders vorteilhaft ist es, wenn der Sollwert für die Stellung des Stellelementes aus dem Sollluftmassenstrom durch den Bypass mittels einer invertierten und auf Normbedingungen bezogenen Durchflusskennlinie ermittelt wird. Auf diese Weise lässt sich der Sollwert für die Stellung der Stellelementes besonders einfach ermitteln, da die auf die Normbedingungen bezogene Durchflusskennlinie in der Regel vom Hersteller angegeben wird.
Vorteilhaft ist weiterhin, wenn die aktuellen Bedingungen für Druck, Temperatur und/oder Strömungsgeschwindigkeit durch jeweils einen Korrekturfaktor berücksichtigt werden. Auf diese Weise lassen sich trotz der auf die Normbedingungen bezogenen Durchflusskennlinie die aktuellen Bedingungen auf einfache Weise berücksichtigen.
In besonders einfacher Weise kann der Sollluftmassenstrom durch den Bypass in Abhängigkeit eines Sollluftmassenstroms durch den Verdichter ermittelt werden.
Besonders vorteilhaft ist es, wenn der Sollluftmassenstrom durch den Verdichter aus einem invertierten Verdichterkennfeld in Abhängigkeit einer Verdichterdrehzahl und eines Sollverdichterdruckverhältnisses ermittelt wird. Auf diese Weise lässt sich der Sollluftmassenstrom durch den Verdichter besonders einfach ermitteln, da das Verdichterkennfeld in der Regel vom Hersteller angegeben wird und zudem in allen Betriebsbereichen der Brennkraftmaschine gültig und weder temperatur- noch druckabhängig ist.

Besonders vorteilhaft ist es, wenn bei Ausbildung des Verdichters als mechanischer Lader die Verdichterdrehzahl aus einer Motordrehzahl der Brennkraftmaschine abgeleitet wird. Auf diese Weise lässt sich das invertierte Verdichterkennfeld besonders einfach adressieren.

Zeichnung

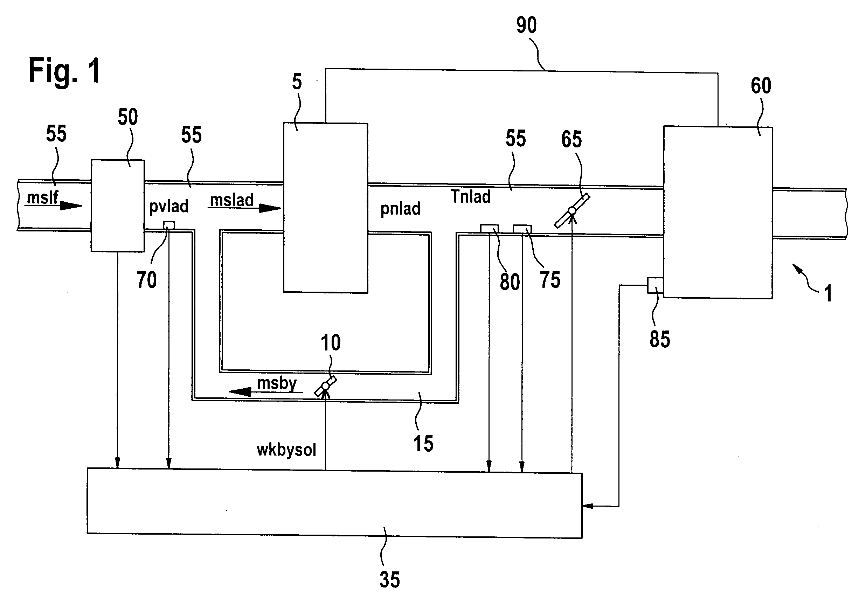

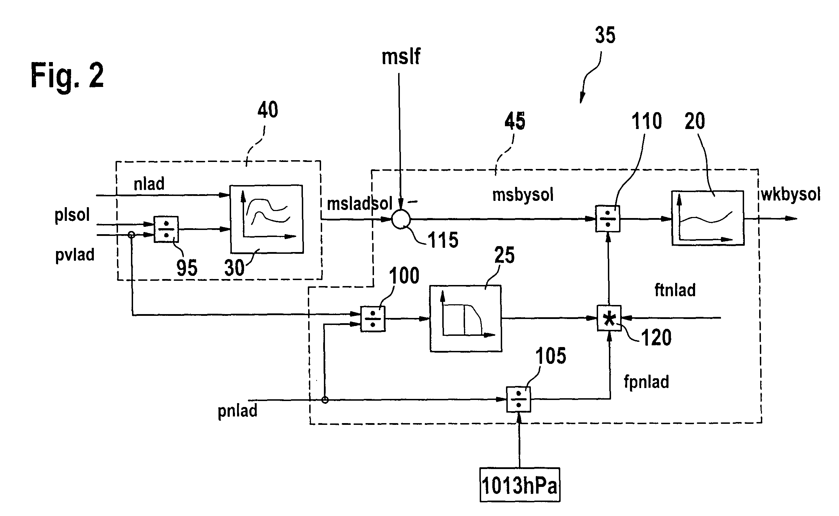

Ein Ausführungsbeispiel der Erfindung ist in der Zeichnung dargestellt und in der nachfolgenden Beschreibung näher erläutert. Es zeigen Figur 1 eine schematische Ansicht einer Brennkraftmaschine und Figur 2 ein Funktionsdiagramm zur Erläuterung des erfindungsgemäßen Verfahrens und der erfindungsgemäßen Vorrichtung.

Beschreibung des Ausführungsbeispiels

In Figur 1 kennzeichnet 1 eine Brennkraftmaschine, die beispielsweise ein Fahrzeug antreibt.

Die Brennkraftmaschine 1 umfasst einen Verbrennungsmotor 60, der beispielsweise als Ottomotor oder als Dieselmotor ausgebildet sein kann. Im Folgenden wird beispielhaft angenommen, dass es sich beim Verbrennungsmotor 5 um einen Ottomotor handelt. Die nachfolgenden Betrachtungen gelten aber in gleicher Weise für einen Dieselmotor. Dem Ottomotor 60 ist über eine Luftzufuhr 55 Frischluft zugeführt. In der Luftzufuhr 55 ist zunächst ein Luftmassenmesser 50, der beispielsweise als Heißfilm-Luftmassenmesser ausgebildet sein kann, angeordnet. Der Luftmassenmesser 50 misst den der Luftzufuhr 55 über ein in Figur 1 nicht dargestelltes Luftfilter zugeführten Frischluftmassenstrom mslf und leitet den Messwert an eine erfindungsgemäße Vorrichtung 35 weiter, die in diesem Ausführungsbeispiel software- und/oder hardwaremäßig in einer Motorsteuerung implementiert sein kann. Im Folgenden soll der Einfachheit halber angenommen werden, dass die Vorrichtung 35 der Motorsteuerung entspricht. In Figur 1 ist die Strömungsrichtung der Frischluft in der Luftzufuhr 55 durch Pfeile kennzeichnet. Dem Luftmassenmesser 50 in Strömungsrichtung der Frischluft in der Luftzufuhr 55 nachfolgend ist ein erster Drucksensor 70 angeordnet, der den Druck pvlad vor einem nachfolgend angeordneten Verdichter 5 misst und den Messwert an die Motorsteuerung 35 weiterleitet. Der Verdichter 5 in der Luftzufuhr 55 ist von einem Bypass 15 umgangen, der ein Stellelement 10, das beispielsweise als Bypassventil ausgebildet sein kann, umfasst. Durch den Bypass 15 fließt ein Teil der vom Verdichter 5 verdichteten Luft wieder in Strömungsrichtung der Frischluft vor den Verdichter 5 zurück, um erneut durch den Verdichter 5 verdichtet zu werden. Der Luftmassenstrom msby durch den Bypass 15 addiert sich somit mit dem der Luftzufuhr 55 zugeführten Frischluftmassenstrom mslf zu einem Luftmassenstrom mslad durch den Verdichter 5. Das Stellelement 10 wird von der Motorsteuerung 35 zur Einstellung eines vorgegebenen Sollluftmassenstroms msbysol durch den Bypass 15 angesteuert. Dazu gibt die Motorsteuerung 35 einen Sollwert wkbysol für die Stellung des Stellelementes 10 vor. Dem Verdichter 5 in Strömungsrichtung der dem Ottomotor 60 zugeführten Luft nachfolgend ist in der Luftzufuhr 55 ein Temperatursensor 80 und ein zweiter Drucksensor 75 angeordnet. Der Temperatursensor 80 misst die Temperatur Tnlad der Luft in der Luftzufuhr 55 in Strömungsrichtung nach dem Verdichter 5 und leitet den Messwert an die Motorsteuerung 35 weiter. Der zweite Drucksensor 75 misst den Druck pnlad in der Luftzufuhr 55 in Strömungsrichtung nach dem Verdichter 5 und leitet den Messwert an die Motorsteuerung 35 weiter. Dem Temperatursensor 80 und dem zweiten Drucksensor 75 in Strömungsrichtung nachfolgend ist eine Drosselklappe 65 angeordnet, deren Stellung ebenfalls von der Motorsteuerung 35 zur Erzielung einer für die Verbrennung im Ottomotor 60 gewünschten Füllung in dem Fachmann bekannter Weise angesteuert wird. Im Falle eines Dieselmotors ist die Drosselklappe 65 üblicherweise nicht vorhanden. Weitere Bestandteile des Ottomotors 60, wie z. B. Einspritzung und Zündung sind in Figur 1 aus Gründen der Übersichtlichkeit nicht dargestellt. Am Ottomotor 60 ist ein Drehzahlsensor 85 angeordnet, der die Motordrehzahl misst und den Messwert an die Motorsteuerung 35 weiterleitet. Beim Verdichter 5 kann es sich beispielsweise um einen mechanischen Lader handeln, der über ein in Figur 1 schematisch angedeutetes Getriebe 90 mit dem Ottomotor 60 verbunden ist. Der mechanische Lader 5 wird somit über das Getriebe 90 vom Ottomotor 60 angetrieben. Die Drehzahl nlad des mechanischen Laders 5 hängt deshalb starr an der Motordrehzahl. In manchen Fällen ist zwischen dem mechanischen Lader 5 und dem Ottomotor 60 eine Kupplung installiert, mit der die Verbindung zwischen dem mechanischen Lader 5 und dem Ottomotor 60 aufgetrennt werden kann. Das Verhältnis zwischen der Drehzahl nlad des mechanischen Laders 5 und der Motordrehzahl des Ottomotors 60 ist durch die Übersetzung des Getriebes 90 fest vorgegeben und in der Motorsteuerung 35 bekannt. Somit kann die Motorsteuerung 35 aus dem Messwert für die Motordrehzahl und dem bekannten Verhältnis die Drehzahl nlad des mechanischen Laders 5 leicht herleiten.

Abhängig von der Drehzahl nlad des mechanischen Laders 5 und dem Luftmassenstrom mslad durch den mechanischen Lader 5 stellt sich am mechanischen Lader 5 ein bestimmtes Verdichterdruckverhältnis Vv ein. Durch Variation des Luftmassenstroms mslad durch den mechanischen Lader 5 wird ein gewünschter Sollladedruck plsol in Strömungsrichtung dem mechanischen Lader 5 in der Luftzufuhr 55 nachfolgend umgesetzt. Der vom zweiten Drucksensor 75 gemessene Druck pnlad in Strömungsrichtung nach dem mechanischen Lader 5 ist dabei der Istladedruck.

Ein Verdichterkennfeld KFVERD des mechanischen Laders 5 ist beispielsweise vom Hersteller des mechanischen Laders 5 angegeben und beschreibt das Verdichterdruckverhältnis Vv über dem mechanischen Lader 5 als Funktion der Drehzahl nlad des mechanischen Laders 5, die im Folgenden auch als Laderdrehzahl bezeichnet wird, und des Luftmassenstroms mslad durch den mechanischen Lader 5. Es gilt also

$$Vv = KFVERD(mslad, nlad) \tag{1}$$

Aus dem gemessenen Druck pvlad in Strömungsrichtung vor dem mechanischen Lader 5, der beispielsweise dem Umgebungsdruck entsprechen und der alternativ auch in dem Fachmann bekannter Weise modelliert sein kann, und dem vorgegebenen Sollladedruck plsol lässt sich ein Sollverdichterdruckverhältnis Vvsol wie folgt berechnen:

$$Vvsol = plsol/pvlad \tag{2}$$

Durch Invertierung das Verdichterkennfeldes KFVERD wird auf der Grundlage von Gleichung (1) daraus ein Sollluftmassenstrom msladsol durch den mechanischen Lader 5 wie folgt berechnet:

$$msladsol = INV\_KFVERD(Vvso), nlad) \tag{3}$$

Dabei ist INV_KFVERD das invertierte Verdichterkennfeld KFVERD.
Der Sollluftmassenstrom msladsol durch den mechanischen Lader 5 setzt sich zusammen aus dem der Luftzufuhr 55 über das Luftfilter zugeführten Frischluftmassenstrom mslf und dem Sollluftmassenstrom msbysol durch den Bypass 15. Somit ergibt sich

$$msladsol = mslf + msbysol \tag{4}$$

Aus Gleichung (4) ergibt sich der Sollluftmassenstrom msbysol durch den Bypass 15 aus der Differenz zwischen dem Sollluftmassenstrom msladsol durch den mechanischen Lader 5 und den Frischluftmassenstrom mslf durch den Luftfilter:

$$msbysol = msladsol - mslf \tag{5}$$

Aus dem Sollluftmassenstrom msbysol durch den Bypass 15 kann der Sollwert wkbysol für die Stellung der Stellelementes 10 berechnet werden, der erforderlich ist, um den Sollluftmassenstrom msbysol durch den Bypass 15 umzusetzen. Die Beziehung zwischen dem Sollwert wkbysol für die Stellung der Stellelementes 10 und dem Sollluftmassenstrom msbysol durch den Bypass 15 beschreibt die nachfolgende Gleichung:

$$msbysol = MSNBY(wkbysol) * ftnlad * fpnlad * KLAF(pvlad/pnlad) \tag{6}$$

Dabei ist MSNBY eine Kennlinie für den Durchfluss durch den Bypass 15 unter Normbedingungen, die den Sollluftmassenstrom msbysol durch den Bypass 15 in Abhängigkeit des Sollwertes wkbysol für die Stellung der Stellelementes 10 abgibt und die beispielsweise ebenfalls vom Hersteller des Stellelementes 10 angegeben werden kann. Ist das Stellelement 10 beispielsweise als Bypassventil ausgebildet, so kann es sich bei dem Sollwert wkbysol für die Stellung des Bypassventils um einen Sollventilhub handeln. Ist das Stellelement 10 beispielsweise als Bypassklappe ausgebildet, so kann es sich bei dem Sollwert wkbysol für die Stellung der Bypassklappe um einen Sollwinkel für die Stellung der Bypassklappe handeln. Die Normbedingungen bestehen dabei in einer Normtemperatur Tnlad_norm in Strömungsrichtung nach dem mechanischen Lader 5 von 273 K, einem Normdruck pnlad_norm in Strömungsrichtung nach dem mechanischen Lader 5 von 1013 hPa und einer Normströmungsgeschwindigkeit der durch den Bypass 15 transportierten Luft gleich der Schallgeschwindigkeit. Ein erster Korrekturfaktor ftnlad berücksichtigt eine von der Normtemperatur Tnlad_norm abweichende Temperatur Tnlad in Strömungsrichtung nach dem mechanischen Lader 5 wie folgt:

$$ftnlad = \sqrt{\frac{273K}{Tnlad}} \qquad (7)$$

Ein zweiter Korrekturfaktor fpnlad berücksichtigt einen vom Normdruck pnlad_norm abweichenden Druck pnlad in Strömungsrichtung nach dem mechanischen Lader 5 wie folgt:

$$fpnlad = pnlad/1013hPa \qquad (8)$$

Die dritte Normgröße ist wie beschrieben die Strömungsgeschwindigkeit. Unter Normbedingungen beträgt sie wie beschrieben die Schallgeschwindigkeit. Dabei ist das Druckverhältnis über dem Stellelement 10 pvlad/pnlad < 0,52 und eine normierte Ausflusskennlinie KLAF liefert als dritter Korrekturfaktor für die Strömungsgeschwindigkeit den Wert 1. Bei größeren Druckverhältnissen pvlad/pnlad sinkt die Strömungsgeschwindigkeit und der dritte Korrekturfaktor KLAF für die Strömungsgeschwindigkeit ist kleiner 1. Die normierte Ausflusskennlinie KLAF als dritter Korrekturfaktor ist gemäß Gleichung (6) und in dem Fachmann bekannter Weise eine Funktion des Druckverhältnisses pvlad/pnlad über dem Stellelement 10 und auf die Schallgeschwindigkeit normiert. Auf Kosten der Genauigkeit könnten weniger als die drei Korrekturfaktoren berücksichtigt werden. Der Druck pvlad in Strömungsrichtung vor dem mechanischen Lader 5 entspricht dem Druck in Strömungsrichtung der durch den Bypass 15 strömenden Luft nach dem Stellelement 10. Die Strömungsrichtung der durch den Bypass 15 strömenden Luft ist in Figur 1 ebenfalls durch einen Pfeil gekennzeichnet. Der Druck pnlad in Strömungsrichtung nach dem mechanischen Lader 5 entspricht dem Druck in Strömungsrichtung der durch den Bypass 15 strömenden Luft vor dem Stellelement 10.

Eine Vorschrift zur Berechnung des Sollwertes wkbysol für die Stellung des Stellelementes 10 erhält man, wenn man Gleichung (6) nach dem Sollwert wkbysol auflöst. Dabei verwendet man die invertierte Kennlinie INV_MSNBY für den Durchfluss durch den Bypass 15 unter Normbedingungen. Somit ergibt sich dieser Sollwert wkbysol zu:

$$wkbysol = INV\_MSNBY(msbysol/(fpnlad * ftnlad * KLAF(pvlad/pnlad))) \qquad (9)$$

In Figur 2 ist ein Funktionsdiagramm für die Motorsteuerung 35 zur Ermittlung des Sollwertes wkbysol für die Stellung der Stellelementes 10 dargestellt. Die Motorsteuerung 35 umfasst dabei eine erste Ermittlungseinheit 40, die aus der Laderdrehzahl nlad, dem Sollladedruck plsol und dem Druck pvlad in Strömungsrichtung vor dem mechanischen Lader 5 den Sollluftmassenstrom msladsol durch den mechanischen Lader 5 ermittelt. Dabei wird einem Kennfeld 30, welches das invertierte Verdichterkennfeld FNV_KFVERD ist, die Laderdrehzahl nlad als erste Eingangsgröße zugeführt. Weiterhin wird der Sollladedruck plsol in einem ersten Divisionsglied 95 durch den Druck pvlad in Strömungsrichtung vor dem mechanischen Lader 5 dividiert. Der so gebildete Quotient wird als zweite Eingangsgröße dem Kennfeld 30 zugeführt, das gemäß Gleichung (3) den Sollluftmassenstrom msladsol durch den mechanischen Lader 5 bestimmt. Ferner umfasst die Motorsteuerung 35 eine zweite Ermittlungseinheit 45, die aus dem Frischluftmassenstrom mslf durch das Luftfilter, dem Druck pvlad in Strömungsrichtung vor dem mechanischen Lader 5, dem Druck pnlad in Strömungsrichtung nach dem mechanischen Lader 5, dem Normdruck pnlad_norm und dem ersten Korrekturfaktor ftnlad den Sollwert wkbysol für die Stellung des Stellelementes 10 ermittelt. Dabei wird vom Sollluftmassenstrom msladsol durch den mechanischen Lader 5 der Frischluftmassenstrom mslf durch das Luftfilter in einem Subtraktionsglied 115 subtrahiert. Die sich bildende Differenz ist der Sollluftmassenstrom msbysol durch den Bypass 15. Der Sollluftmassenstrom msbysol durch den Bypass 15 wird einem vierten Divisionsglied 110 zugeführt und dort durch den Ausgang eines Multiplikationsgliedes 120 dividiert. Der so gebildete Quotient wird der invertierten Kennlinie INV_MSNBY für den Durchfluss durch den Bypass 15 als Eingangsgröße zugeführt, die gemäß Gleichung (9) den Sollwert wkbysol für die Stellung des Stellelementes 10 ermittelt. Die Motorsteuerung 35 steuert das Stellelement 10 Stand zur Umsetzung dieses Sollwertes wkbysol an. Der Druck pvlad in Strömungsrichtung vor dem mechanischen Lader 5 wird in einem zweiten Divisionsglied 100 durch den Druck pnlad in Strömungsrichtung nach dem mechanischen Lader 5 dividiert. Der so gebildete Quotient wird der normierten Ausflusskennlinie KLAF als Eingangsgröße zugeführt, wobei die normierte Ausflusskennlinie KLAF in Figur 2 mit dem Bezugszeichen 25 gekennzeichnet ist. Sie liefert als Ausgang den dritten Korrekturfaktor und führt diesen als erste Eingangsgröße dem Multiplikationsglied 120 zu. Der Druck pnlad in Strömungsrichtung nach dem mechanischen Lader 5 wird außerdem in einem dritten Divisionsglied 105 durch den Normdruck pnlad_norm = 1013 hPa dividiert. Der so gebildete Quotient ist der zweite Korrekturfaktor und wird ebenfalls dem Multiplikationsglied 120 als zweite Eingangsgröße zugeführt. Dem Multiplikationsglied 120 wird außerdem als dritte Eingangsgröße der erste Korrekturfaktor ftnlad gemäß Gleichung (7) zugeführt. Die drei Eingangsgrößen des Multiplikationsgliedes 120 werden im Multiplikationsglied 120 miteinander multipliziert. Das so gebildete Produkt ist dann die Ausgangsgröße des Multiplikationsgliedes 120 und wird dem vierten Divisionsglied 110 zugeführt.

Die Eingangsgrößen des Funktionsdiagrammes nach Figur 2, nämlich der Frischluftmassenstrom mslf durch das Luftfilter, die Laderdrehzahl nlad bzw. die Motordrehzahl des Ottomotors 60, der Druck pvlad in Strömungsrichtung vor dem mechanischen Lader 5, der Druck pnlad in Strömungsrichtung nach dem mechanischen Lader 5 und der erste Korrekturfaktor ftnlad bzw. die Temperatur Tnlad in Strömungsrichtung nach dem mechanischen Lader 5 können wie beschrieben jeweils durch einen entsprechenden Sensor gemessen oder in dem Fachmann bekannter Weise modelliert werden. Durch das erfindungsgemäße Verfahren und die erfindungsgemäße Vorrichtung 35 wird auf physikalischer Basis der Sollwert wkbysol für die Stellung des Stellelementes 10 in Abhängigkeit des vorgegebenen Sollladedruckes plsol berechnet, sodass eine in den Figuren nicht dargestellte Ladedruckregelung durch eine Vorsteuerung ergänzt wird, die auf messbare Störgrößen bei der Verwendung von Sensoren zur Ermittlung der genannten Eingangsgrößen des Funktionsdiagrammes nach Figur 2 sofort reagiert und dadurch die Ladedruckregelung entlastet, die erst eine Regelabweichung abwarten muss, bevor sie reagiert. Dadurch wird ein schnellstmögliches Erreichen des Sollladedruckes plsol ohne zu große Überschwinger erreicht. Das bei aufgeladenen Motoren verzögerte Beschleunigen, Turboloch genannt, wird minimiert.

Als Verdichter 5 kann statt des mechanischen Laders auch ein beliebiger anderer Lader verwendet werden, der in der beschriebenen Weise von dem Bypass 15 mit dem Stellelement 10 umgangen wird und dessen Laderdrehzahl nlad in der Motorsteuerung 35 bekannt ist. Dies kann z. B. auch bei einem elektrisch betriebenen Lader der Fall sein, der von einem von der Motorsteuerung 35 angesteuerten Elektromotor beispielsweise mit einer fest vorgegebenen und bekannten Laderdrehzahl nlad oder mit einer in Abhängigkeit der Betriebsbedingungen der Brennkraftmaschine 1 und/oder einer in Abhängigkeit des einzustellenden Sollladedruckes plsol von der Motorsteuerung 35 vorgegebenen Laderdrehzahl nlad betrieben wird.

**Patentansprüche**

1. Verfahren zum Betreiben einer Brennkraftmaschine (1) mit einem Verdichter (5) zur Verdichtung der der Brennkraftmaschine (1) zugeführten Luft, wobei ein vorgegebener Sollladedruck über ein Stellelement (10) in einem Bypass (15) zum Verdichter (5) eingestellt wird, **dadurch gekennzeichnet, dass** aus dem Sollladedruck ein Sollluftmassenstrom durch den Bypass (15) ermittelt wird und dass aus dem Sollluftmassenstrom durch den Bypass (15) ein Sollwert für die Stellung des Stellelementes (10) abgeleitet wird.

2. Verfahren nach Anspruch 1, **dadurch gekennzeichnet, dass** der Sollwert für die Stellung des Stellelementes (10) aus dem Sollluftmassenstrom durch den Bypass (15) mittels einer invertierten und auf Normbedingungen bezogenen Durchflusskennlinie (20) ermittelt wird.

3. Verfahren nach Anspruch 2, **dadurch gekennzeichnet, dass** die aktuellen Bedingungen für Druck, Temperatur und/oder Strömungsgeschwindigkeit durch jeweils einen Korrekturfaktor berücksichtigt werden.

4. Verfahren nach Anspruch 3, **dadurch gekennzeichnet, dass** der Korrekturfaktor für die Strömungsgeschwindigkeit mittels einer Ausflusskennlinie (25) in Abhängigkeit eines Druckes vor und eines Druckes nach dem Verdichter (5) ermittelt wird.

5. Verfahren nach einem der vorherigen Ansprüche, **dadurch gekennzeichnet, dass** der Sollluftmassenstrom durch den Bypass (15) in Abhängigkeit eines Sollluftmassenstroms durch den Verdichter (5) ermittelt wird.

6. Verfahren nach Anspruch 5, **dadurch gekennzeichnet, dass** der Sollluftmassenstrom durch den Verdichter (5) aus einem invertierten Verdichterkennfeld (30) in Abhängigkeit einer Verdichterdrehzahl und eines Sollverdichterdruckverhältnisses ermittelt wird.

7. Verfahren nach Anspruch 6, **dadurch gekennzeichnet, dass** bei Ausbildung des Verdichters (5) als mechanischer Lader die Verdichterdrehzahl aus einer Motordrehzahl der Brennkraftmaschine (1) abgeleitet wird.

8. Verfahren nach Anspruch 6 oder 7, **dadurch gekennzeichnet, dass** das Sollverdichterdruckverhältnis als Quotient aus dem Sollladedruck und einem Druck vor dem Verdichter (5) ermittelt wird.

9. Vorrichtung (35) zum Betreiben einer Brennkraftmaschine (1) mit einem Verdichter (5) zur Verdichtung der der Brennkraftmaschine (1) zugeführten Luft, wobei ein Stellelement (10) in einem Bypass (15) zum Verdichter (5) vorgesehen ist, das einen vorgegebenen Sollladedruck einstellt, **dadurch gekennzeichnet, dass** eine erste Ermittlungseinheit (40) vorgesehen ist, die aus dem Sollladedruck einen Sollluftmassenstrom durch den Bypass (15) ermittelt, und dass eine zweite Ermittlungseinheit (45) vorgesehen ist, die aus dem Sollluftmassenstrom durch den Bypass (15) einen Sollwert für die Stellung des Stellelementes (10) ableitet.

# Fig. 1

EP 1 475 524 A1

Fig. 2

EP 1 475 524 A1

Europäisches
Patentamt

**EUROPÄISCHER RECHERCHENBERICHT**

Nummer der Anmeldung

EP 04 00 5088

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DE 44 34 931 A (MAZDA MOTOR) 30. März 1995 (1995-03-30) * Spalte 9, Zeile 26 - Spalte 10, Zeile 48; Anspruch 4; Abbildungen 1,2,4,9 * | 1,5-9 | F02B33/44 F02B37/16 F02D41/00 F02D23/00 |
| X | DE 101 45 038 A (BOSCH GMBH ROBERT) 3. April 2003 (2003-04-03) * Spalte 3, Zeile 33 - Zeile 57; Abbildungen 1,4 * | 1,9 | |
| A | US 6 058 708 A (HEINITZ DIRK  ET AL) 9. Mai 2000 (2000-05-09) * Absätze '0014!, '0020! - '0024!; Abbildungen 1,2 * | 1-9 | |

RECHERCHIERTE
SACHGEBIETE (Int.Cl.7)

F02B
F02D

Der vorliegende Recherchenbericht wurde für alle Patentansprüche erstellt

| Recherchenort | Abschlußdatum der Recherche | Prüfer |
|---|---|---|
| Den Haag | 23. Juli 2004 | Jucker, C |

## ANHANG ZUM EUROPÄISCHEN RECHERCHENBERICHT
## ÜBER DIE EUROPÄISCHE PATENTANMELDUNG NR.

EP 04 00 5088

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-07-2004

| Im Recherchenbericht angeführtes Patentdokument | | Datum der Veröffentlichung | Mitglied(er) der Patentfamilie | | Datum der Veröffentlichung |
|---|---|---|---|---|---|
| DE 4434931 | A | 30-03-1995 | JP | 3366399 B2 | 14-01-2003 |
| | | | JP | 7097928 A | 11-04-1995 |
| | | | DE | 4434931 A1 | 30-03-1995 |
| | | | US | 5454360 A | 03-10-1995 |
| DE 10145038 | A | 03-04-2003 | DE | 10145038 A1 | 03-04-2003 |
| | | | WO | 03027464 A1 | 03-04-2003 |
| | | | EP | 1427929 A1 | 16-06-2004 |
| US 6058708 | A | 09-05-2000 | DE | 19732642 A1 | 25-02-1999 |
| | | | FR | 2766873 A1 | 05-02-1999 |

EPO FORM P0461

Für nähere Einzelheiten zu diesem Anhang : siehe Amtsblatt des Europäischen Patentamts, Nr. 12/82